# EUROPÄISCHE PATENTANMELDUNG

(11) **EP 2 113 407 A1**
(43) Veröffentlichungstag der Anmeldung: **04.11.2009**
(21) Anmeldenummer: 08290412.9
(22) Anmeldetag: 29.04.2008
(51) Int. Cl.: B60H 1/00, B60N 2/56

(54) **Fluidkanal**

(71) Anmelder: Behr France Rouffach SAS, 68250 Rouffach (FR)
(72) Erfinder: Denny, Geoffrey, 68170 Rixheim (FR); Schmittheisler, Christophe, 67680 Epfig (FR); Muller, Jean-Julien, 68740 Blodelsheim (FR)
(74) Vertreter: Grauel, Andreas

(57) **Zusammenfassung**

Die Erfindung betrifft einen temperaturbeeinflussenden Fluidkanal (8), der einen Fluidführungskanal (8) mit geringer Bauhöhe aufweist, in dem eine Wärmeübertragervorrichtung (9) angeordnet ist. Die Wärmeübertragervorrichtung (9) ist dabei schräg (α) zur Fluidströmungsrichtung (A) im Fluidführungskanal (8) eingebaut.

## Beschreibung

Die Erfindung betrifft einen temperaturbeeinflussenden Fluidkanal mit wenigstens einem Fluidführungskanal mit geringer Bauhöhe sowie wenigstens einer darin angeordnete Wärmeübertragervorrichtung. Die Erfindung betrifft weiterhin ein Fluidtemperaturbeeinflussungssystem mit einer Fluidfördereinrichtung und einem temperaturbeeinflussenden Fluidkanal. Darüber hinaus betrifft die Erfindung ein Kraftfahrzeug mit wenigstens einem Fluidtemperaturbeeinflussungssystem und/oder wenigstens einem temperaturbeeinflussenden Fluidkanal. Schließlich betrifft die Erfindung auch einen Sitz mit wenigstens einem Fluidtemperaturbeeinflussungssystem und/oder wenigstens einem temperaturbeeinflussenden Fluidkanal.

Bei einer Vielzahl von Anwendungen beim Belüften von Gebieten, wie insbesondere von umschlossenen Räumen, ist es erwünscht, gefordert oder sogar zwingend erforderlich, nicht nur die bloße Zuführung einer ausreichenden Menge von Luft in das Gebiet hinein sicherzustellen. Vielmehr ist es oftmals erwünscht oder erforderlich, die in das Gebiet abgegebene Luft vorab zu konditionieren. Bei einer derartigen Konditionierung kann es sich beispielsweise um eine Filterung oder eine Entfeuchtung der einem Gebiet zuzuführenden Luft handeln. Die weitaus häufigste Konditionierung der einem Gebiet zuzuführenden Luft besteht jedoch in der Bereitstellung einer erwünschten Luftaustrittstemperatur oder der Erzielung einer Solltemperatur in einem umschlossenen Raum.

Um eine gewisse Luftaustrittstemperatur zu erzielen ist es in der Regel erforderlich, die über eine Luftzuführöffnung angesaugte Luft zu erwärmen oder auch abzukühlen. Bei Anwendungen beispielsweise in den gemäßigten Breitengraden ist dabei eine Temperaturerhöhung (Heizung) häufiger erforderlich, als eine Temperaturerniedrigung (Klimatisierung). Zur Erwärmung bzw. zur Abkühlung von Luft geeignete Heiz- bzw. Kühlvorrichtungen sind in vielfältigen Variationen bereits bekannt.

Bei vielen Anwendungsgebieten, insbesondere im nicht-stationären Bereich stellt sich in besonderem Maße das Problem der Bauraumvorgaben. Denn im nicht-stationären Bereich, wie beispielsweise im Kraftfahrzeugbereich ist mit zunehmender Anzahl an Komponenten und mit der Weiterentwicklung der Antriebssysteme der für eine einzelne Komponente noch zur Verfügung stehende Bauraum inzwischen sehr begrenzt. Dabei ergeben sich oftmals nicht nur hinsichtlich des zur Verfügung stehenden Gesamtvolumens größere Einschränkungen, sondern insbesondere auch hinsichtlich der Formgebung des zur Verfügung stehenden Bauraums.

In manchen Bereichen von Kraftfahrzeugen bestehen beispielsweise besonders enge Beschränkungen hinsichtlich der Dimensionierung des betreffenden Bauteils in einer bzw. in bestimmten Richtungen, während die Bauraumbeschränkungen in einer oder mehreren anderen Richtungen zum Teil erheblich weniger eingeschränkt sein können.

Beispielsweise existieren bei einem Kraftfahrzeug gewisse Bereiche, die bauartbedingt flächig ausgebildet sind. Dabei handelt es sich beispielsweise um das Bodenblech im Bereich des Fahrgastraums, sowie um die Sitzschale bzw. die Sitzlehne einer Kraftfahrzeugsitzes. Bauteile die in diesen Bereichen eingebaut werden, unterliegen in der Regel in einer Richtung, welche normal zur entsprechenden Fläche steht, besonders engen Raumvorgaben. In der Ebene selbst, sind die Bauraumvorgaben jedoch deutlich weniger streng. Das betreffende Bauteil muss also eine geringe Höhe (in Richtung der Flächennormalen) aufweisen, darf allerdings in der Breite und/oder in der Länge im Verhältnis zur Höhe großzügiger dimensioniert sein. Mit anderen Worten ist ein möglichst dünnes, wenn auch flächiges Bauteil erwünscht. Selbstverständlich unterliegen auch die erlaubte Länge und Breite Bauraumvorgaben, die relativ engen Grenzen unterliegen - auch wenn diese Grenzen im Verhältnis zur erlaubten Höhe großzügiger sind.

Gerade die Einschränkung hinsichtlich der erlaubten Höhe (ggf. auch in der Breite und/oder Länge) der eingesetzten Vorrichtung stellt für einige Anwendungen, wie beispielsweise für lufttemperaturverändemde Vorrichtungen ein Problem dar. Denn für eine ausreichende Erwärmung bzw. Abkühlung der hindurchströmenden Luft muss eine ausreichende Stirnfläche des hierfür eingesetzten Wärmeübertragers vorgesehen werden. Derartige luftttemperaturverändernde Vorrichtungen werden beispielsweise als Sitzheizung (bzw. zusätzlich oder alternativ als Sitzkühlung) oder als sogenannter Air-Scarf bei offenen Fahrzeugen (z.B. bei Cabriolets) verwendet.

Damit derartige Sitzheizungen bzw. Air-Scarf ausreichend effektiv arbeiten können, müssen diese einen relativ hohen Luftdurchsatz in Verbindung mit einer recht großen Temperaturerhöhung bereitstellen können. Gleichzeitig muss die entsprechende Vorrichtung sehr dünn und relativ schmal ausgebildet sein. Ein weiteres Problem ergibt sich dadurch, dass Kraftwagensitze in der Regel hinsichtlich ihrer Position zum Fahrzeugcockpit verschiebbar angeordnet sind, so dass Fahrer mit unterschiedlicher Größe das Kraftfahrzeug nutzen können. Dadurch ist es oftmals problematisch, die Luft bereits im Motorraum zu erwärmen, und die dort erwärmte Luft über einen Schlauch in den Kraftfahrzeugsitz hineinzuleiten. Stattdessen werden in der Regel elektrisch betriebene, in sich abgegrenzte Systeme bevorzugt, die in der Rückenlehne und/oder im Sitzschalenbereich des Kraftfahrzeugsitzes eingebaut sind. Auch hinsichtlich der möglichen Betriebstemperatur der Heizkörper selbst ergeben sich in anbetracht der unmittelbar in der Nähe befindlichen Materialien sowie Fahrzeuginsassen enge Grenzen.

Derartige Kraftwagensitze sind beispielsweise in DE 100 54 010 C1 oder in DE 10 2004 060 460 A1 offenbart. Bei den dort beschriebenen Sitzen wird Luft durch ein Gebläse angesaugt und durch einen Luftkanal hindurch bis zu einer Luftausströmerdüse geleitet. Sowohl Gebläse, als auch Luftkanal und Luftausströmerdüse sind dabei im Kraftwagensitz angeordnet. Die Erwärmung der durch den Luftkanal strömenden Luft wird durch einen elektrischen Heizkörper bewirkt, der quer in den Luftkanal eingebaut ist. Einschränkungen hinsichtlich der Breite des Luftkanals - und damit hinsichtlich der Breite des elektrischen Heizkörpers - ergeben sich dabei insbesondere dadurch, dass auch tragende Elemente insbesondere im Bereich der Kraftwagensüzlehne untergebracht werden müssen. Dadurch wird die Leistungsfähigkeit der Vorrichtung deutlich vermindert. Häufig wird entweder der Luftvolumenstrom oder die Erwärmung der Luft von den Passagieren als nicht ausreichend empfunden.

Der Erfindung liegt daher die Aufgabe zugrunde, einen verbesserten temperaturbeeinflussenden Fluidkanal zur Verfügung zu stellen, der auch bei strengen Bauraumvorgaben verwendet werden kann.

Dazu wird vorgeschlagen, einen temperaturbeeinflussenden Fluidkanal, der wenigstens einen Fluidführungskanal mit geringer Bauhöhe sowie wenigstens eine darin angeordnete Wärmeübertragervorrichtung aufweist, derart auszubilden, dass die Wärmeübertragervorrichtung schräg zur Fluidströmungsrichtung im Fluidführungskanal angeordnet ist. Bei den bislang bekannt gewordenen Vorrichtungen wurde nicht in Betracht gezogen, dass auch hinsichtlich der Länge des Luftfiührungskanals Möglichkeiten bestehen, die Querschnittsfläche der Wärmeübertragervorrichtung auf einfache Weise zu erhöhen. Dies kann auf einfache Weise dadurch erfolgen, dass man die Wärmeübertragervorrichtung einfach in einem Winkel zur Querschnittsebene des Fluidführungskanals einbaut. Eine Vergrößerung der Querschnittsfläche der Wärmeübertragervorrichtung hat gegenüber einer Vergrößerung der Tiefe der Wärmeübertragervorrichtung (oder der Hintereinanderanordnung von zwei oder mehreren Wärmeübertragem) insbesondere den Vorteil, dass ein geringerer Druckabfall der hindurchströmenden Luft auftritt. Dadurch kann die Entstehung von Geräuschen verringert werden. Es ist auch möglich, das die Luft fördernde Gebläse kleiner zu dimensioniert werden, wenn es einen geringeren Druck aufbauen muss. Unter einem Fluidführungskanal mit geringer Bauhöhe können insbesondere Fluidführungskanäle verstanden werden, die absolut gesehen eine geringe Bauhöhe aufweisen (als auch unabhängig von der Länge und/oder der Breite des Fluidführungskanals), oder aber auch Fluidführungskanäle, welche eine in Verhältnis zu ihrer Breite und/oder Länge eine nur geringe Höhe aufweisen. Beispielsweise kann es sich um Höhen bis zu 1cm, 1,5 cm, 2 cm, 2,5 cm, 3 cm, 3,5 cm, 4 cm, 4,5 cm oder 5 cm handeln. Als Verhältnis von Höhe zu Breite und/oder als Verhältnis von Höhe zu Länge sind insbesondere Werte von mehr als 1:4, 1:5, 1:7, 1:10, 1:15 oder 1:20 denkbar. Ein Vorteil besteht auch darin, dass lediglich ein einzelner Wärmeübertrager (oder eine relativ geringe Anzahl von Wärmeübertragern) verwendet werden kann, was insbesondere die Herstellungskosten sowie die Montagekosten senken kann. Unter Fluid können Flüssigkeiten, insbesondere jedoch Gase verstanden werden. Dabei können die Gase durchaus Flüssigkeitströpfchen (Nebel) oder Feststoffpartikel (Rauch) enthalten. Als Gas kommt insbesondere Luft in Betracht, die gegebenenfalls mit Duftstoffen oder zusätzlichem Sauerstoff beaufschlagt werden kann. Bei den Wärmeübertragervorrichtungen kann es sich um Kühlvorrichtungen wie Verdampfer, insbesondere jedoch um Heizvorrichtungen wie elektrische Heizkörper oder Kühlmittelheizkörper handeln.

Bei den bisherigen Versuchen hat sich gezeigt, dass bei dem temperaturbeeinflussenden Fluidkanal der Winkel zwischen Wärmeübertragervorrichtung und Fluidanströmrichtung vorzugsweise zwischen 10° und 80°, vorzugsweise zwischen 20° und 70°, besonders vorzugsweise 30° bis 60°, insbesondere zwischen 40° und 50° liegen sollte. Derartige Winkelbereiche beeinflussen die Fluidströmung in der Regel nicht in relevantem Umfang nachteilig. Andererseits kann eine spürbare Vergrößerung der Oberfläche der Wärmeübertragervorrichtung erzielt werden. Selbstverständlich können die Grenzwerte der genannten Intervalle auch beliebig miteinander kombiniert werden.

Als vorteilhaft hat es sich auch erwiesen, wenn bei dem temperaturbeeinflussenden Fluidkanal die Flächennormale der Wärmetauschervorrichtung im Wesentlichen in der Ebene der Fluidströmung liegt. Die Wärmetauschervorrichtung ist also "schräg" zur Fluidströmung angeordnet, ist aber nicht "verkantet" (in einem Winkel zu einer flächig ausgebildeten Gehäusewand stehend) angeordnet. Gerade bei einer geringen zur Verfügung stehenden Bauhöhe und einer gewissen Tiefe der Wärmeübertragervorrichtung würde eine derartige Verkantung dazu führen, dass die Höhe der Wärmeübertragervorrichtung geringer dimensioniert werden müsste, was nachteilig wäre. Mit der vorgeschlagenen Ausrichtung kann dagegen die zur Verfügung stehende Höhe optimal genutzt werden.

Wenn bei dem temperaturbeeinflussenden Fluidkanal die Wärmeübertragervorrichtung als Wellrippenwärmeübertragervorrichtung ausgebildet ist, kann die Wärme bzw. Kälte von der Wärmeübertragervorrichtung besonders effektiv abgegeben werden. Insbesondere können dabei die erforderlichen wärmeerzeugenden, kältemittelführenden bzw. kühlmittelführenden Bauteile in geringerer Anzahl bzw. mit geringerer Baugröße vorgesehen werden. Dennoch kann durch die Wellrippen eine sehr große Wärmeübertragungsfläche zur Verfügung gestellt werden. Der Wärmeübergang kann durch das Vorsehen von Flügeln an den Wellrippen nochmals erhöht werden.

Es kann sich als sinnvoll erweisen, wenn bei dem temperaturbeeinflussenden Fluidkanal die Wärmeübertragervorrichtung als elektrische Wärmeübertragervoichtung ausgebildet ist, insbesondere als PTC-Heizvorrichtung. Bei einer solchen Vorrichtung kann die zum Betrieb erforderliche Energie mittels elektrischer Energie zugeführt werden. Diese elektrische Energie kann auch zum Betrieb anderer Komponenten wie beispielsweise für ein Gebläse oder für Stellmotoren verwendet werden. Eine derartige Ausbildung kann insbesondere dann von Vorteil sein, wenn der temperaturbeeinflussende Fluidkanal in einer Vorrichtung eingebaut ist, deren Position verändert werden kann.

Weiterhin wird ein Fluidtemperaturbeeinflussungssystem, insbesondere ein separates Fluidtemperaturbeeinflussungssystem, mit wenigstens einer Fluidfördereinrichtung vorgeschlagen, welches wenigstens einen temperaturbeeinflussenden Fluidkanal mit dem oben vorgeschlagenen Aufbau aufweist. Ein derartiges Fluidtemperaturbeeinflussungssystem kann als eigenständige Komponente vormontiert werden. Dadurch kann sich der Montageaufwand beim Einbau des Fluidtemperaturbeeinflussungssystems verringern. Insbesondere können die Erfordernisse bezüglich der Anschlüsse des Fluidtemperaturbeeinflussungssystems geringer ausfallen.

Weiterhin wird ein Kraftfahrzeug vorgeschlagen, welches wenigstens ein Fluidtemperaturbeeinflussungssystem mit dem oben beschriebenen Aufbau und/oder wenigstens einen temperaturbeeinflussenden Fluidkanal mit dem oben beschriebenen Aufbau aufweist. Gerade bei Kraftfahrzeugen sind die Bauraumvorgaben hinsichtlich des zur Verfügung stehenden Volumens und/oder hinsichtlich der Formgebung des zur Verfügung stehenden Bauraums oftmals besonders streng. Insofern können die Vorteile und Eigenschaften des vorgeschlagenen Fluidtemperaturbeeinflussungssystem bzw. des temperaturbeeinflussenden Fluidkanal hier besonders deutlich hervortreten.

Vorgeschlagen wird darüber hinaus ein Sitz, insbesondere ein Kraftfahrzeugsitz, welcher wenigstens ein Fluidtemperaturbeeinflussungssystem mit dem oben beschriebenen Aufbau und/oder wenigstens einen temperaturbeeinflussenden Fluidkanal mit dem oben beschriebenen Aufbau aufweist. Auch in diesem Zusammenhang können die Vorteile und Eigenschaften des vorgeschlagenen Fluidtemperaturbeeinflussungssystem bzw. des temperaturbeeinflussenden Fluidkanals hier besonders deutlich hervortreten. Dies gilt insbesondere, da Sitze möglichst kompakt ausgeführt sein sollten. Außerdem sind Sitze oftmals beweglich angeordnet, so dass sich beispielsweise auch Probleme hinsichtlich der Anschlüsse des Kraftfahrzeugsitzes ergeben können.

Als vorteilhaft kann es sich darüber hinaus erweisen, wenn bei dem Sitz, insbesondere bei einem Kraftfahrzeugsitz, wenigstens eine Fluidausströmeinrichtung im Bereich einer Sitzfläche und/oder im Bereich einer Rückenlehnenfläche und/oder im Bereich einer Kopfstützenhalterung und/oder in einem Fußbodenbereich angeordnet ist. Gerade bei derartigen Einbausituationen kann das vorgeschlagene Fluidtemperaturbeeinflussungssystem bzw. der temperaturbeeinflussende Fluidkanal parallel zu einer ohnehin in gewissem Umfang flächig ausgebildeten Komponente ausgebildet werden.

Im Folgenden wird die Erfindung unter Verwendung einzelner ausgewählter Ausführungsbeispiele und unter Verweis auf die beigefügten Figuren näher beschrieben. Es zeigen:
- Fig. 1:: Kraftwagensitz mit integriertem Air-Scarf-Heizlüftersystem in schematischer, perspektivischer Ansicht;
- Fig. 2:: das in Fig. 1 verwendete Heizlüftersystem in perspektivischer schematischer Ansicht;
- Fig. 3:: den Bereich des in den Fig. 1 und 2 gezeigten Luftführungskanals mit dem elektrischen Heizkörper in perspektivischer Ansicht;
- Fig. 4:: den Bereich des in den Fig. 1 und 2 gezeigten Luftführungskanals mit dem elektrischen Heizkörper in Draufsicht;
- Fig. 5:: Kraftwagensitz mit Heizlüftersystem für den Fondsbereich eines Kraftwagens im seitlichen Querschnitt.

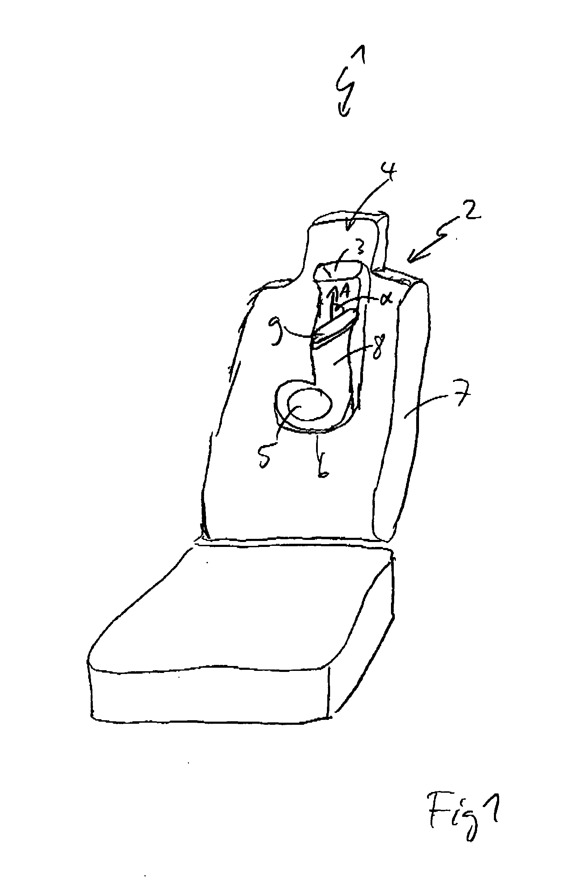

In Fig. 1 ist ein Kraftwagensitz 1 mit einem sogenannten "Air-scarf"-System 2 dargestellt. Die Rückenlehne 7 des Kraftwagensitzes 1 ist zur Verdeutlichung des Air-scarf-Systems 2 offen dargestellt.

Air-scarf-Systeme 2 werden in offenen Fahrzeugen (Cabriolets) verwendet, damit die Passagiere auch bei offenem Verdeck keinen unangenehmen Luftzug im Halsbereich verspüren. Gerade der Halsbereich ist bei vielen Menschen relativ empfindlich gegen Zugluft. Darüber hinaus ist der Halsbereich der Passagiere bei Fahrten mit offenem Verdeck oftmals unbekleidet und befindet sich in einem Wagen mit offenem Verdeck in Bereichen, in denen regelmäßig Zugluft auftritt.

Das Air-scarf-System 2 weist eine Luftausströmerdüse 3 auf, die im Halsbereich eines Passagiers angeordnet ist, und eine Breite aufweist, die in etwa der Breite eines Halses entspricht oder größer ausgeführt ist. Im in Fig. 1 dargestellten Ausführungsbeispiel eines Kraftwagensitzes 1 ist die Lufstausströmerdüse 3 des Air-scarf-Systems 2 in einem unteren Bereich der Kopfstütze 4 in die Kopfstütze 4 integriert.

Die Lufstausströmerdüse 3 des Air-scarfs 2 wird von einem Radiallüfter 5, der in einer Gebläsespirale 6 angeordnet ist, über einen Luftführungskanal 8 mit Luft versorgt. Um den Luftstrom erwärmen zu können, ist im Luftführungskanal 8 ein elektrischer Heizkörper 9 angeordnet, der im vorliegend dargestellten Ausführungsbeispiel als elektrischer Wellrippen-PTC-Zuheizer dargestellt ist. Die Temperatur der Luft kann über hier nicht dargestellte Temperatursensoren vor und/oder nach dem elektrischen Heizkörper 9 gemessen werden. In Abhängigkeit von den gemessenen Werten kann die Leistung des Radiallüfters 5 und/oder des elektrischen Heizkörpers 9 geregelt werden.

Um den Innenraum des Kraftfahrzeugs, in dem der Kraftwagensitz 1 eingebaut werden kann, optimal auszunutzen und um insbesondere die Beinfreiheit der Fondpassagiere zu erhöhen, ist es erstrebenswert, das Air-scarf-System 2 möglichst flach auszubilden. Die Breite des Air-scarf-Systems 2 kann deutlich großzügiger dimensioniert werden. Jedoch ist es bei heutigen Kraftwagensitzen 1 oftmals nicht möglich, die volle Breite der Rückenlehne 7 auszunutzen. Denn in der Rückenlehne 7 sind insbesondere Stützen für die mechanische Stabilität der Rückenlehne 7, als auch Führungseinrichtungen für die in der Regel verstellbar ausgelegte Kopfstütze 4 vorzusehen. Dies vermindert die Breite des für das Air-scarf-System 2 zur Verfügung stehenden Bauraums. Damit ist auch die Breite des Luftführungskanals 8 entsprechend beschränkt. Aus der Höhe und der Breite des Luftführungskanals 8 ergibt sich die Querschnittsfläche des Luftführungskanals 8. Wird der elektrische Heizkörper 9 wie bislang üblich senkrecht zur Luftströmungsrichtung A in den Luftführungskanal 8 eingebaut, so entspricht die maximal mögliche Stirnfläche des elektrischen Heizkörpers 9 in etwa der Querschnittsfläche des Luftführungskanals 8. Dementsprechend ist auch bei einem bestimmten Luftvolumenstrom die maximal mögliche Temperaturerhöhung der hindurchströmenden Luft begrenzt.

Um die Stirnfläche des elektrischen Heizkörpers 9 zu erhöhen, um so die maximal mögliche Temperaturerhöhung der hindurchströmenden Luft zu vergrößern, ist der elektrische Heizkörper 9 unter einem Winkel α gegenüber der Strömungsrichtung A der durch den Luftführungskanal 8 hindurchströmenden Luft angeordnet. Im in Fig. 1 dargestellten Ausführungsbeispiel ist der Winkel α mit α=45° gewählt, wobei selbstverständlich auch abweichende Winkel gewählt werden können. Insbesondere kann der Winkel α so gewählt werden, dass die verfügbare Länge des Luftführungskanals 8 im Wesentlichen voll ausgenutzt werden kann. Zur Dimensionierung kann die Beziehung tan α = *L*/*B* verwendet werden, wobei L die zur Verfügung stehende Länge und B die zur Verfügung stehende Breite angibt. Ein demgegenüber verkleinerter Winkel α kann insbesondere dann sinnvoll sein, wenn die maximal erforderliche Temperaturerhöhung kleiner gewählt werden kann, als sich bei einer bestmöglichen Länge des elektrischen Heizkörpers 8 ergeben würde.

Um die Lage der Luftausströmerdüse 3 verstellen zu können ist es auch möglich, den Luftführungskanal 8 teleskopierbar auszuführen. Dies kann beispielsweise durch zwei ineinandergesteckte Teillluftführungskanäle 8a, 8b erfolgen, die hinsichtlich ihrer Durchmesser aufeinander angepasst sind. Dies ist in Fig. 1 aus Übersichtsgründen nicht dargestellt.

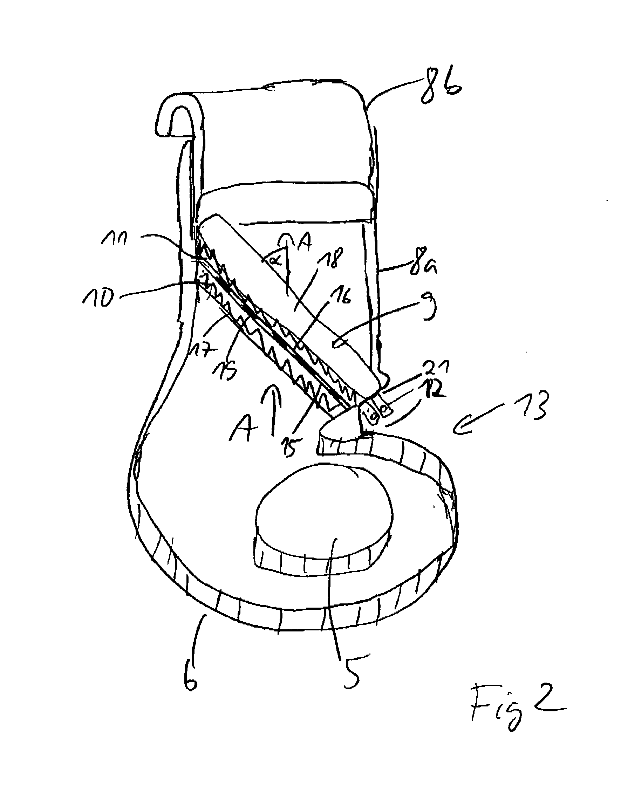

In Fig. 2 ist das in Fig. 1 verwendete Air-scarf-Systerin 2 vergrößert dargestellt. Dabei ist das Air-scarf-System 2 zum besseren Verständnis ohne die obere Gehäusehälfte dargestellt.

In Fig. 2 ist der bereits erwähnte teleskopierbare Luftführungskanal 8 mit zwei Teillluftführungskanälen 8a, 8b zu erkennen.

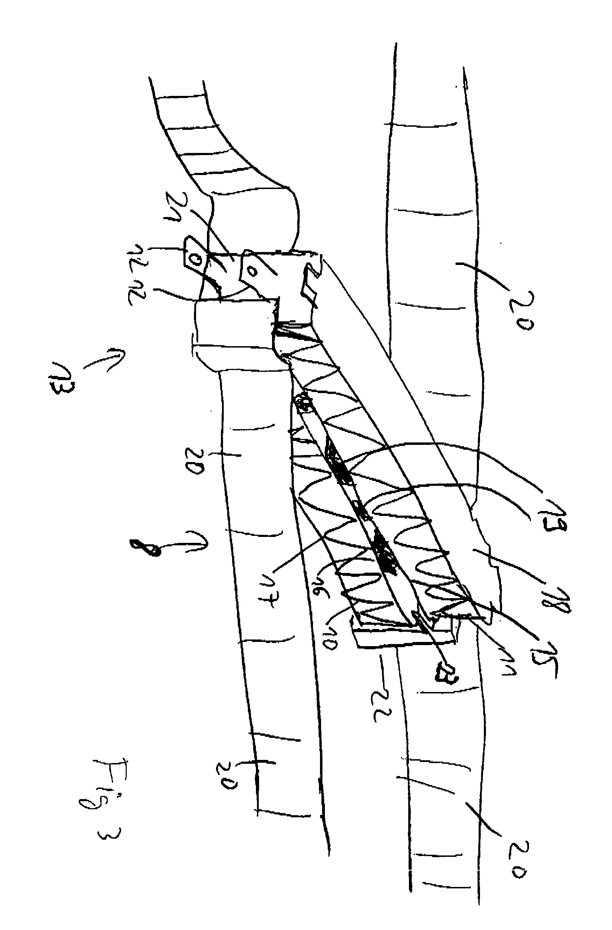

Wie in Fig. 2 ebenfalls zu erkennen ist, ist der elektrische Heizkörper 9 im vorliegenden Ausführungsbeispiel als Wellrippen-PTC-Zuheizer ausgeführt. Der elektrische Heizkörper weist dabei zwei Ebenen aus Wellrippen 10, 11 auf, die übereinander angeordnet sind. In der Mitte, zwischen den beiden Wellrippenebenen 10, 11 sind die PTC-Steine 19 und die in der Mittel liegenden Metallbleche 15, 16, zwischen denen die PTC-Steine 19 liegen, vorgesehen (vgl. Fig. 3). Weiterhin ist zu erkennen, wie die elektrischen Steckverbindungsanschlüsse 12 seitlich aus dem Luftführungskanal 8 herausragen. Die Steckverbinder 12 sind so angeordnet, dass ein Anschluss mit Hilfe eines zweipoligen Steckers erfolgen kann. Die Lage der Steckverbinder 12 ist so gewählt, dass diese auf der Seite 13 des Luftführungskanals 8 liegen, an der die Gebläsespirale 6 bauchig hervorsteht. Dadurch kann der zur Verfügung stehende Bauraum optimal genutzt werden.

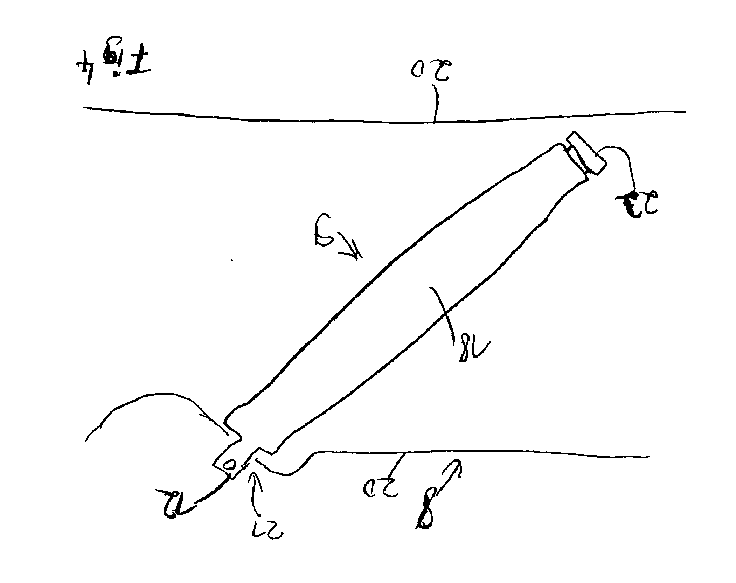

In den Fig. 3 und 4 ist der Bereich, in dem der elektrische Heizkörper 9 im Luftführungskanal 8 angeordnet ist, vergrößert dargestellt.

In Fig. 3 sind die beiden Wellrippenebenen 10, 11 des elektrischen Heizkörpers 9 gut zu erkennen. In der Mitte zwischen den beiden Wellrippenebenen 10, 11 sind die einzelnen PTC-Steine 19 zu erkennen. Diese sind auf Metallbleche 15, 16 geklebt, die der Stromzuführung, der mechanischen Stabilität sowie der Wärmeverteilung der von den PTC-Steinen 19 erzeugten Wärme an die Wellrippen 10, 11 dienen. Weiterhin sind oben und unten am elektrischen Heizkörper 9 weitere Metallbleche 17, 18 angeordnet, die unter anderem der mechanischen Stabilität des elektrischen Heizkörpers 9 dienen.

Um einen ausreichenden Abstand zwischen den beiden Steckverbindern 12 zu erzeugen, ist nur das obere 15 der in der Mitte liegenden Metallbleche 15,16 mit einem Steckverbinder 12 versehen. Der andere Steckverbinder 12 ist mit dem unten liegenden, randseitigen Metallblech 17 verbunden. Der elektrische Strom fließt dabei von den PTC-Steinen 19 ausgehend über das untere, in der Mitte liegende Metallblech 16 und die untere Wellrippe 10 zum unten liegenden, randseitigen Metallblech 17.

Die Lagerung des elektrischen Heizkörpers auf der Steckkontaktseite 12 erfolgt in einer geeignet geformten Ausnehmung 21 in der Gehäusewand 20 des Luftführungskanals 8. Um dem Winkel α, in dem der elektrische Heizkörper 9 angeordnet ist, Rechnung zu tragen, ist die Gehäusewand 20 des Luftführungskanals 8 im Bereich der Ausnehmung 21 ebenfalls unter einem Winkel α angeordnet.

Der elektrische Heizkörper 9 ist auf der dazu entgegengesetzten Seite mit Hilfe eines Andruckelements 22 aus einem elastischen Material, wie beispielsweise aus Federstahl befestigt. Das Andruckelement weist eine Vorspannung auf, so dass der elektrische Heizkörper 9 in die Ausnehmung 21 gedrückt und dadurch in seiner Position fixiert wird. Am Andruckelement 22 ist darüber hinaus noch eine Nase 23 zu erkennen, die in den Raum zwischen den beiden in der Mitte liegenden Metallblechen 15, 16 hervorsteht. Dies ist möglich, da im unmittelbaren Randbereich des elektrischen Heizkörpers 9 aus thermischen Gründen in der Regel ohnehin keine PTC-Steine 19 vorgesehen werden. Selbstverständlich können auch seitliche Führungselemente vorgesehen werden.

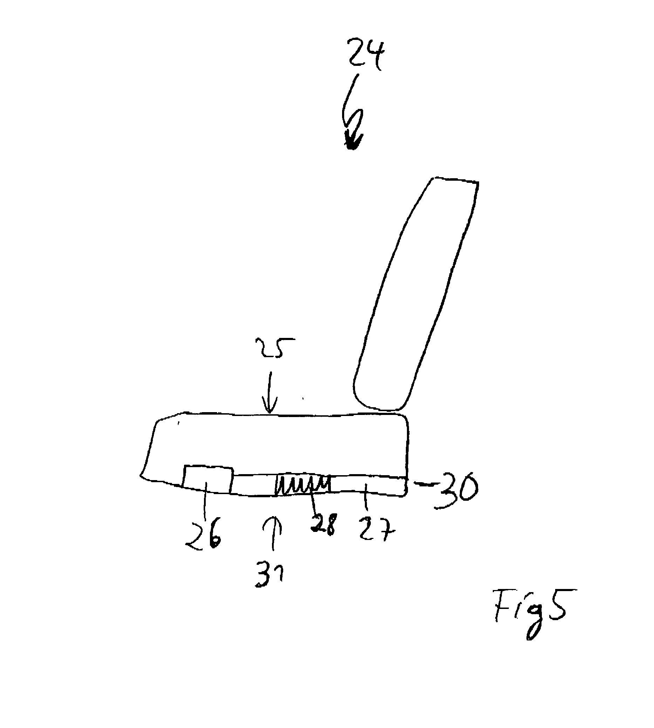

In Fig. 5 ist ein weiterer Kraftfahrzeugsitz 24 in seitlicher Querschnittsansicht dargestellt. Im Sitzflächenbereich 25 des Kraftfahrzeugsitzes ist eine Fußraumheizung 31 für den Fondbereich des Kraftfahrzeuges dargestellt. Die Fußraumheizung 31 weist ein Gebläse 26 auf, das Luft über einen Luftführungskanal 27 zu einer Luftausströmerdüse 30 fördert, die die Luft in den Fußraumbereich der Fondspassagiere abgibt. Im Luftführungskanal 27 ist analog zum in den Fig. 1 bis 3 dargestellten Air-Scarf-System 2 ein elektrischer Heizkörper 28 schräg zur Luftströmungsrichtung im Luftführungskanal 27 eingebaut. Die Fußraumheizung 31 kann ansonsten analog zum Air-Scarf-System 2 ausgebildet werden.

## Patentansprüche

1. Temperaturbeeinflussender Fluidkanal (8, 27), aufweisend wenigstens einen Fluidführungskanal (8, 27) mit geringer Bauhöhe sowie wenigstens eine darin angeordnete Wärmeübertragervorrichtung (9, 28), **dadurch gekennzeichnet, dass** die Wärmeübertragervorrichtung (9, 28) schräg (α) zur Fluidströmungsrichtung (A) im Fluidführungskanal (8, 27) angeordnet ist.

2. Temperaturbeeinflussender Fluidkanal (8, 27) nach Anspruch 1, **dadurch gekennzeichnet, dass** der Winkel (α) zwischen Wärmeübertragervorrichtung (9, 28) und Fluidanströmrichtung (A) zwischen 10° und 80°, vorzugsweise zwischen 20° und 70°, besonders vorzugsweise 30° bis 60°, insbesondere zwischen 40° und 50° liegt.

3. Temperaturbeeinflussender Fluidkanal (8, 27) nach Anspruch 1 oder 2, **dadurch gekennzeichnet, dass** die Flächennormale der Wärmetauschervorrichtung (9, 28) im Wesentlichen in der Ebene der Fluidströmung (A) liegt.

4. Temperaturbeeinflussender Fluidkanal (8, 27) nach einem der vorangehenden Ansprüche, **dadurch gekennzeichnet, dass** die Wärmeübertragervorrichtung (9, 28) als Wellrippenwärmeübertragervorrichtung (Fig. 3) ausgebildet ist.

5. Temperaturbeeinflussender Fluidkanal (8, 27) nach einem der vorangehenden Ansprüche, **dadurch gekennzeichnet, dass** die Wärmeübertragervorrichtung (9, 28) als elektrische Wärmeübertragervorrichtung ausgebildet ist, insbesondere als PTC-Heizvorrichtung (Fig. 3).

6. Fluidtemperaturbeeinflussungssystem (2, 31), insbesondere separates Fluidtemperaturbeeinflussungssystem (2, 31), mit wenigstens einer Fluidfördereinrichtung (5, 26), **gekennzeichnet durch** wenigstens einen temperaturbeeinflussenden Fluidkanal (8, 27) nach einem der Ansprüche 1 bis 5.

7. Kraftfahrzeug, **gekennzeichnet durch** wenigstens ein Fluidtemperaturbeeinflussungssystem (2, 31) nach Anspruch 6 und/oder wenigstens einen temperaturbeeinflussenden Fluidkanal (8, 27) nach einem der Ansprüche 1 bis 5.

8. Sitz (1, 24), insbesondere Kraftfahrzeugsitz, **gekennzeichnet durch** wenigstens ein Fluidtemperaturbeeinflussungssystem (2, 31) nach Anspruch 6 und/oder wenigstens einen temperaturbeeinflussenden Fluidkanal (8, 27) nach einem der Ansprüche 1 bis 5.

9. Sitz (1, 24) nach Anspruch 8, insbesondere Kraftfahrzeugsitz, **gekennzeichnet durch** wenigstens eine Fluidausströmeinrichtung (3, 30) im Bereich einer Sitzfläche (25) und/oder im Bereich einer Rückenlehnenfläche (7) und/oder im Bereich einer Kopfstützenhalterung (4) und/oder in einem Fußbodenbereich (30) angeordnet ist.
